# EUROPÄISCHE PATENTANMELDUNG

(11) **EP 2 096 372 A2**
(43) Veröffentlichungstag der Anmeldung: **02.09.2009**
(21) Anmeldenummer: 09002611.3
(22) Anmeldetag: 25.02.2009
(51) Int. Cl.: F24H 1/43

(54) **Heizgerät**

(30) Priorität: 01.03.2008 DE 102008012126
(71) Anmelder: Robert Bosch GmbH, 70442 Stuttgart (DE)
(72) Erfinder: Rausch, Rainer, 36304 Alsfeld (DE)

(57) **Zusammenfassung**

Die Erfindung betrifft ein Heizgerät, insbesondere Brennwertheizgerät, umfassend einen Gas- oder Ölbrenner in einer zylindrischen Brennkammer (1), welche radial von einem schraubenförmig gewendelten Wärmetauscher begrenzt ist, mindestens einen Spalt (2) für den Durchtritt von Heizgasen durch den Wärmetauscher, ein vorderes Deckelelement (3) zur Aufnahme des Brenners, ein hinteres Deckelelement (4) als Verschluss für die Brennkammer (1), Vor- und Rücklaufanschlussstutzen (13, 15) sowie radial außerhalb des Wärmetauschers mit einem Abgassammelraum (5) unter einem umgebenden Mantel (6) mit einem Anschlussstutzen (7) für eine Abgasleitung.

Der Erfindung liegt die Aufgabe zugrunde, den Wärmetauscher eines Heizgerätes, insbesondere eines Brennwertheizgerätes, besonders im Hinblick auf möglichst kompakte Abmessungen und gute Wärmeübertragungseigenschaften zu optimieren.

Gekennzeichnet ist die Erfindung dadurch, dass der schraubenförmig gewendelte Wärmetauscher innerhalb seines den Spalt (2) für den Durchtritt von Heizgasen begrenzenden Profils (9) in mindestens zwei Strömungskanäle (11, 12) aufgeteilt ist.

## Beschreibung

Die Erfindung betrifft ein Heizgerät, insbesondere ein Brennwertheizgerät, nach dem Oberbegriff des Patentanspruches 1.

Gattungsgemäße Heizgeräte werden mit einem Gas- oder Ölbrenner befeuert und besitzen eine zylindrische Brennkammer, welche radial von einem schraubenförmig gewendelten Wärmetauscher begrenzt ist. Mindestens ein Spalt zwischen den Rohrwendeln für den Durchtritt der Heizgase stellt die eigentliche Wärmetauscherfläche dar. Weiterhin üblich sind ein vorderes Deckelelement zur Aufnahme des Brenners, ein hinteres Deckelelement als Verschluss für die Brennkammer, Vor- und Rücklaufanschlussstutzen sowie ein Abgassammelraum, welcher radial außerhalb des Wärmetauschers unter einem umgebenden Mantel angeordnet und mit einem Anschlussstutzen für eine Abgasleitung versehen ist. Hinsichtlich der heizwasserseitigen Strömungsführung handelt es sich um einen zwangsdurchströmten Wärmetauscher. Eine Umwälzpumpe sorgt für einen vorgegebenen Wasservolumenstrom durch die zumeist relativ engen Wasserkanäle. Auf diese Weise sind trotz geringen Wasserinhaltes recht hohe, heizgasseitig eingetragene Wärmestromdichten realisierbar.

Aus der DE 20 2005 011 633 U1 ist ein Heizgerät mit zwei schraubenförmig gewendelten Wärmetauschern bekannt, die ineinander verschraubt und parallel zueinander von einem Heizmedium durchströmbar ausgebildet sind. Dabei sind die nebeneinander angeordneten Wendelenden miteinander verbunden und weisen einen gemeinsamen Anschlussstutzen auf. Vor- und Rücklaufanschlussstutzen befinden sich auf gegenüberliegenden Stirnseiten des Wärmetauschers.

Die DE 10 2004 023 711 B3 zeigt ebenfalls ein Heizgerät mit einem schraubenförmig gewendelten Wärmetauscher und mindestens zwei hydraulisch miteinander verbundenen Wendelbereichen. Diese sind durchmesserunterschiedlich ausgebildet und können schraubenförmig ineinander gedreht angeordnet sein. Das Abgas strömt somit zuerst durch die Spalte der inneren Wendel und dann über einen Zwischenraum weiter durch die Spalte in der äußeren Wendel. Weil auch bei dieser Ausführung ein einstückiges Rohr, insbesondere Vierkantrohr, eingesetzt wird, ist es fertigungstechnisch dabei kaum möglich, auf die Spaltgeometrie Einfluss zu nehmen.

Weiterhin ist aus der DE 10 2006 029 854 A1 ein Wärmetauscher mit ringförmig ausgebildeten Strömungskanälen bekannt. Hier werden mehrere gleiche ringförmige Segmente vertikal und parallel zueinander zu einem Wärmetauscher kombiniert. Zwischen den Segmenten befindet sich ein Spalt für den Durchtritt der Heizgase von der im Zentrum angeordneten Brennkammer nach außen. Die Wärme übertragenden Oberflächen begrenzen beidseitig diesen Spalt und im Inneren der Segmente strömt das Heizmedium. Auch wenn hier ein zwangsdurchströmter Wärmetauscher mit einer wechselweise oben und unten vorgesehenen Überströmung von Segment zu Segment vorliegt, kann es zu Problemen kommen, weil eine vollständige Entlüftung aus den oberen Bereichen der einzelnen Segmente nicht möglich ist.

Der Erfindung liegt die Aufgabe zugrunde, den Wärmetauscher eines Heizgerätes, insbesondere eines Brennwertheizgerätes, besonders im Hinblick auf möglichst kompakte Abmessungen und gute Wärmeübertragungseigenschaften zu optimieren.

Erfindungsgemäß wird dies mit den Merkmalen des Patentanspruches 1 gelöst. Vorteilhafte Weiterbildungen sind den Unteransprüchen zu entnehmen.

Das aus einer zylindrischen Brennkammer und einem radial diese begrenzenden, schraubenförmig gewendelten Wärmetauscher bestehende Heizgerät ist **dadurch gekennzeichnet, dass** der schraubenförmig gewendelte Wärmetauscher innerhalb seines den Spalt für den Durchtritt von Heizgasen begrenzenden Profils in mindestens zwei Strömungskanäle aufgeteilt ist.

Diese mindestens zwei Strömungskanäle werden durch mindestens eine Trennwand in einen inneren, brennkammernahen Strömungskanal und mindestens einen äußeren, durchmessergrößeren Strömungskanal aufgeteilt, wobei die mindestens zwei Strömungskanäle hydraulisch miteinander verbunden sind. Und zwar so, dass zuerst der äußere, brennkammerferne Strömungskanal, welcher mit dem Rücklaufanschlussstutzen verbunden ist, und danach der innere, brennkammernahe Strömungskanal, welcher mit dem Vorlaufanschlussstutzen verbunden ist, durchströmt werden.

Dabei weist der innere, brennkammernahe Strömungskanal vorteilhafterweise einen geringeren Querschnitt als der äußere, brennkammerferne Strömungskanal auf. Der innere, brennkammernahe Strömungskanal ist so bemessen, dass sich höhere Strömungsgeschwindigkeiten als im äußeren, brennkammerfernen Strömungskanal einstellen, weil in Brennernähe die größte Wärmemenge abgeführt werden muss. Außen kommt somit zunächst das relativ kühle Rücklaufwasser an und ermöglicht daher ein starkes Herunterkühlen der Heizgase.

Das Profil des schraubenförmig gewendelten Wärmetauschers ist in einem Endbereich so mit Abstand zur Trennwand verschlossen, dass eine Überströmöffnung bzw. eine Umlenkzone vom äußeren zum inneren Strömungskanal ausgebildet wird. Generell besteht das Profil des schraubenförmig gewendelten Wärmetauschers aus mindestens zwei miteinander verschweißten Halbschalen. Dabei bildet jede Halbschale einen Kreisring, dessen Enden mit axialem Versatz zueinander stehen.

An der Innenseite mindestens einer Halbschale ist die mindestens eine Trennwand angebracht. Es reicht dafür eine Punktschweißung und ein Anliegen an der Innenseite der anderen, später anzufügenden Halbschale aus, weil die Kanäle nicht völlig flüssigkeitsdicht voneinander getrennt sein müssen.

In einer ersten Ausführungsform sind die Enden einer Halbschale unterschiedlich, und somit die Halbschalen in Rechts- und Linksausführung ausgebildet. Dadurch ist das erste Ende einer Halbschale zur Aufnahme des zweiten Endes einer anderen, benachbarten Halbschale etwas eingezogen oder aufgeweitet, wobei sich die Enden zweier benachbarter Halbschalen in Umfangsrichtung etwas überlappen. In einer zweiten Ausführungsform werden die Enden einer Halbschale stumpf miteinander verschweißt, wobei das erste Ende der ersten Halbschale mit dem zweiten Ende einer anderen, benachbarten Halbschale verbunden wird. Nach dem Zusammenfügen der Stirnseiten sind bei beiden Ausführungsformen jeweils zwei einander zugeordnete Halbschalen und/oder das gesamte Profil innen und außen an jeweils schraubenförmig umlaufenden Berührungsflächen mit Schweißnähten zu verbinden.

Die Geometrie des Spaltes für den Durchtritt von Heizgasen zwischen dem Profil des Wärmetauschers und/oder der den Spalt begrenzenden, Wärme übertragenden Oberflächen ist durch den Umformvorgang bei der Herstellung der Halbschalen beeinflussbar. Beispielsweise können Prägungen und/oder Oberflächenstrukturen, insbesondere zur Turbulenzerzeugung, eingebracht werden. Weiterhin können eine oder zwei benachbarte, sich gegenüberstehende, den Spalt begrenzende Oberflächen mit Vorsprüngen versehen sein.

Diese definieren die Spaltbreite und stützen sich aufeinander und/oder auf der gegenüber liegenden Oberfläche ab.

Zwei benachbarte, sich gegenüberstehende, den Spalt begrenzende Oberflächen können auch durch Punktschweißung fest miteinander verbunden sein. In diesem Falle bleibt der freie Spaltquerschnitt überwiegend gewährleistet ist und nur im Bereich der Schweißung liegt punktuell eine Berührung bzw. Spalteinengung vor.

Mit der erfindungsgemäßen Gestaltung entsteht ein Wärmetauscher für ein Heizgerät mit bester Eignung für Brennwertbetrieb, sehr kompakten Abmessungen und guten Wärmeübertragungseigenschaften. Alle wasserseitigen Anschlüsse befinden sich gut zugänglich auf einer Seite. Durch die Aufteilung der Strömungskanäle ist die Temperaturverteilung im Wärmetauscher optimiert und die Effektivität gegenüber bekannten Prinzipien gesteigert. Auch eine vertikale Anordnung der Trennwand im Profil, also in radialer Richtung ist möglich. Der Profilaufbau mit Halbschalen bietet neben der einfachen Herstellung auch den Vorteil, unterschiedliche Längen für verschiedene Feuerungs- und Wärmetauscherleistungen variabel abzudecken. Trotzdem bleiben dann alle stirnseitig angeordneten Anbauteile sowie die Verbindung zwischen Deckelelementen und Wasser führendem Profilkörper gleich. Nur der umgebende Mantel variiert. Wegen der niedrigen Abgastemperaturen kann dieser sogar aus Kunststoff hergestellt werden.

Die Zeichnung stellt Ausführungsbeispiele der Erfindung dar. Es zeigt einen Wärmetauscher eines Heizgerätes:

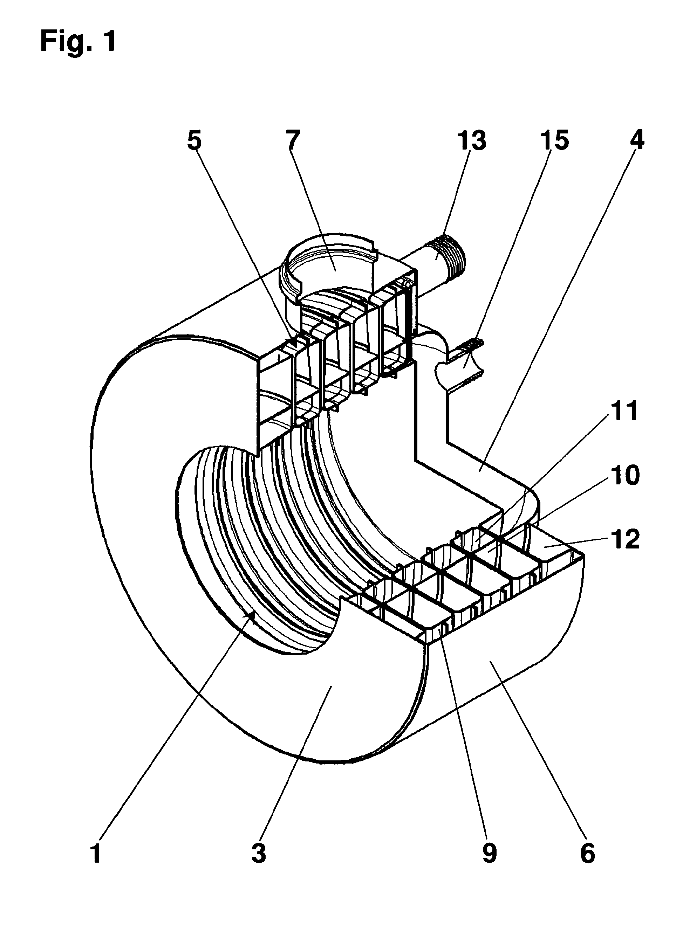

- Fig. 1:: in einer perspektivischen Gesamtansicht mit einem Schnitt im Eckbereich,

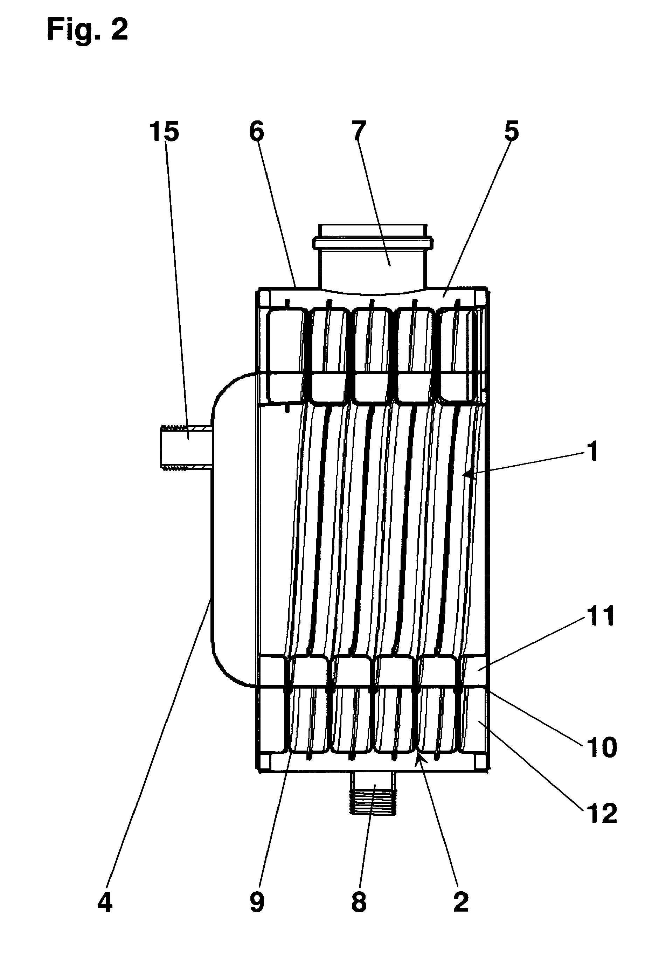

- Fig. 2:: in einem vertikalen Längsschnitt,

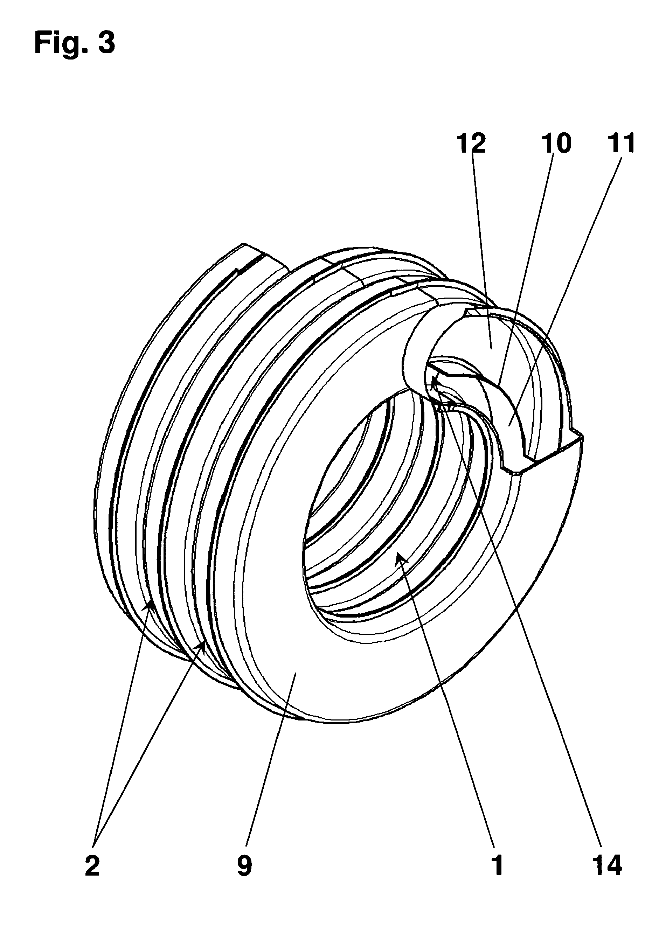

- Fig. 3:: mit dem gesamten Profil und einem Ausbruch im Bereich der Umlenkzone in einer perspektivischen Ansicht,

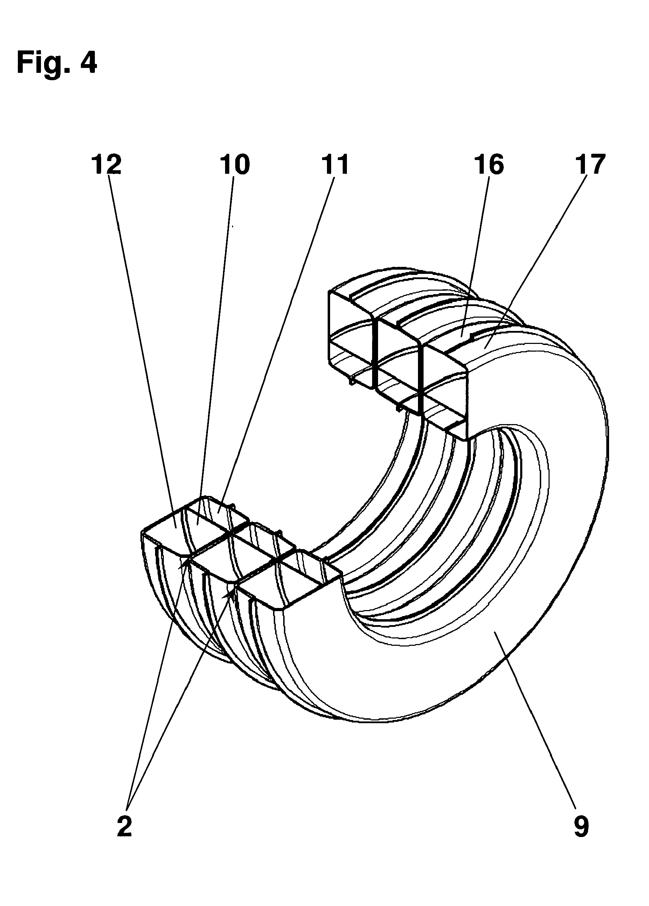

- Fig. 4:: mit dem gesamten Profil und einem Schnitt im Eckbereich in einer perspektivischen Ansicht,
- Fig. 5:: zwei zu einem Profil verbundene Halbschalen in einer perspektivischen Ansicht und
- Fig. 6:: zwei einzelne, zugeordnete Halbschalen in einer perspektivischen Ansicht.

Eine zylindrische Brennkammer 1 wird radial von einem schraubenförmig gewendelten Wärmetauscher begrenzt, welcher mindestens einen Spalt 2 für den Durchtritt von Heizgasen aufweist. Ein vorderes Deckelelement 3 zur Aufnahme eines nicht dargestellten Brenners und ein hinteres Deckelelement 4 dienen als Verschluss für die Brennkammer 1. Ein Abgassammelraum 5 befindet sich unter einem umgebenden Mantel 6 mit einem Anschlussstutzen 7 für eine Abgasleitung radial außerhalb des Wärmetauschers. An der tiefsten Stelle ist ein Kondenswasserablauf 8 vorgesehen.

Der schraubenförmig gewendelte Wärmetauscher ist innerhalb seines den Spalt 2 begrenzenden Profils 9 durch eine Trennwand 10 in einen inneren, brennkammernahen Strömungskanal 11 und einen äußeren, durchmessergrößeren Strömungskanal 12 aufgeteilt, welche hydraulisch miteinander verbunden sind. Ausgehend vom Rücklaufanschlussstutzen 13 gelangt das Heizmedium zuerst in den äußeren Strömungskanal 12, durchströmt über die gesamte Länge das schraubenförmig gewendelte Profil 9, und wird am gegenüberliegenden Ende in den inneren, brennkammernahen Strömungskanal 11 umgelenkt. Dazu ist das Profil 9 so mit Abstand zur Trennwand 10 verschlossen, dass eine Überströmöffnung 14 ausgebildet wird. Danach durchströmt es den Strömungskanal 11 bis zum Vorlaufanschlussstutzen 15.

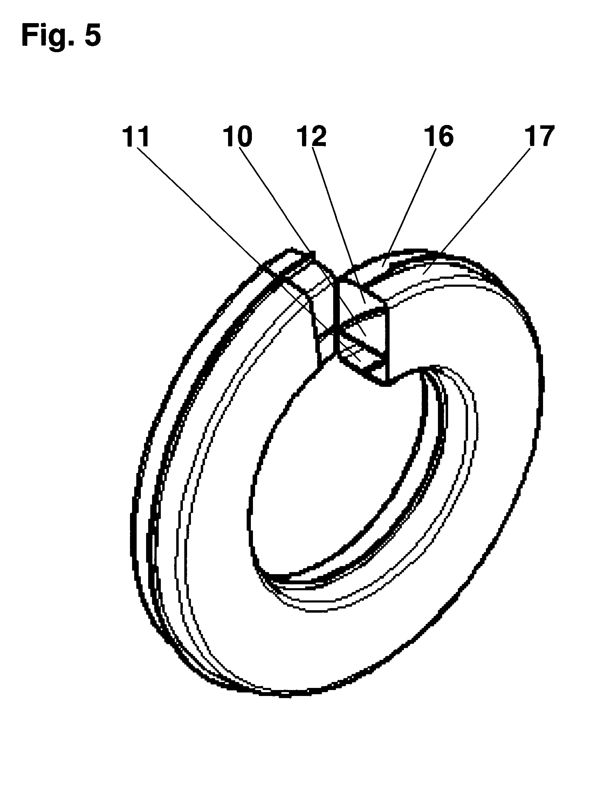

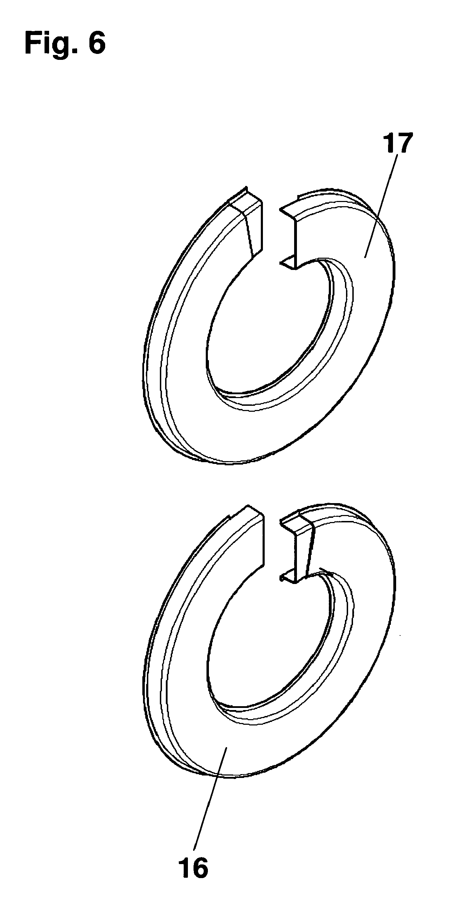

Das Profil 9 besteht gemäß Fig. 6 aus zwei miteinander zu verschweißenden Halbschalen 16, 17, wobei jede Halbschale 16, 17 einen Kreisring bildet, dessen Enden mit axialem Versatz zueinander stehen. An der Innenseite mindestens einer Halbschale ist die Trennwand 10 angebracht. Die Enden einer Halbschale 16, 17 sind unterschiedlich ausgebildet, so dass eine Rechts- und Linksausführung entsteht. Das erste Ende einer Halbschale 16, 17 ist zur Aufnahme des zweiten Endes einer anderen, benachbarten, gleichartigen Halbschale 16, 17 etwas eingezogen oder aufgeweitet. Über einen Kreisumfang betrachtet entsteht gemäß Fig. 5 nach dem Verschweißen der Halbschalen 16, 17 ein ringförmiges Element bzw. Hohlprofil mit Anschlussflächen für weitere gleichartige Teile. Dabei sind jeweils zwei einander zugeordnete Halbschalen 16, 17 und/oder das gesamte Profil 9 an der Innen- und Außenwand an jeweils schraubenförmig umlaufenden Berührungsflächen mit Schweißnähten verbunden.

## Patentansprüche

1. Heizgerät, insbesondere Brennwertheizgerät, umfassend einen Gas- oder Ölbrenner in einer zylindrischen Brennkammer (1), welche radial von einem schraubenförmig gewendelten Wärmetauscher begrenzt ist, mindestens einen Spalt (2) für den Durchtritt von Heizgasen durch den Wärmetauscher, ein vorderes Deckelelement (3) zur Aufnahme des Brenners, ein hinteres Deckelelement (4) als Verschluss für die Brennkammer (1), Vor- und Rücklaufanschlussstutzen (13, 15) sowie radial außerhalb des Wärmetauschers mit einem Abgassammelraum (5) unter einem umgebenden Mantel (6) mit einem Anschlussstutzen (7) für eine Abgasleitung,
**dadurch gekennzeichnet, dass** der schraubenförmig gewendelte Wärmetauscher innerhalb seines den Spalt (2) für den Durchtritt von Heizgasen begrenzenden Profils (9) in mindestens zwei Strömungskanäle (11, 12) aufgeteilt ist.

2. Heizgerät nach Anspruch 1,
**dadurch gekennzeichnet, dass** die mindestens zwei Strömungskanäle (11, 12) durch mindestens eine Trennwand (10) in einen inneren, brennkammernahen Strömungskanal (11) und mindestens einen äußeren, durchmessergrößeren Strömungskanal (12) aufgeteilt werden.

3. Heizgerät nach Anspruch 1 oder 2,
**dadurch gekennzeichnet, dass** die mindestens zwei Strömungskanäle (11, 12) hydraulisch miteinander verbunden sind.

4. Heizgerät nach einem der Ansprüche 1 bis 3,
**dadurch gekennzeichnet, dass** die mindestens zwei Strömungskanäle (11, 12) so hydraulisch miteinander verbunden sind, dass zuerst der äußere, brennkammerferne Strömungskanal (12), welcher mit dem Rücklaufanschlussstutzen (13) verbunden ist, und danach der innere, brennkammernahe Strömungskanal (11), welcher mit dem Vorlaufanschlussstutzen (15) verbunden ist, durchströmt werden.

5. Heizgerät nach einem der Ansprüche 1 bis 4,
**dadurch gekennzeichnet, dass** der innere, brennkammernahe Strömungskanal (11) einen geringeren Querschnitt als der äußere, brennkammerferne Strömungskanal (12) aufweist.

6. Heizgerät nach einem der Ansprüche 1 bis 5,
**dadurch gekennzeichnet, dass** der innere, brennkammernahe Strömungskanal (11) so bemessen ist, dass sich höhere Strömungsgeschwindigkeiten als im äußeren, brennkammerfernen Strömungskanal (12) einstellen.

7. Heizgerät nach einem der Ansprüche 1 bis 6,
**dadurch gekennzeichnet, dass** das Profil (9) des schraubenförmig gewendelten Wärmetauschers in einem Endbereich so mit Abstand zur Trennwand (10) verschlossen ist, dass eine Überströmöffnung (14) vom äußeren zum inneren Strömungskanal (12, 11) ausgebildet wird.

8. Heizgerät nach einem der Ansprüche 1 bis 7,
**dadurch gekennzeichnet, dass** das Profil (9) des schraubenförmig gewendelten Wärmetauschers aus mindestens zwei miteinander verschweißten Halbschalen (16, 17) besteht, wobei jede Halbschale (16, 17) einen Kreisring bildet, dessen Enden mit axialem Versatz zueinander stehen.

9. Heizgerät nach einem der Ansprüche 1 bis 8,
**dadurch gekennzeichnet, dass** an der Innenseite mindestens einer Halbschale (16, 17) die mindestens eine Trennwand (10) angebracht ist.

10. Heizgerät nach einem der Ansprüche 1 bis 9,
**dadurch gekennzeichnet, dass** die Enden einer Halbschale (16, 17) unterschiedlich, und somit die Halbschalen (16, 17) in Rechts- und Linksausführung ausgebildet sind, so dass das erste Ende einer Halbschale (16, 17) zur Aufnahme des zweiten Endes einer anderen, benachbarten Halbschale (16, 17) etwas eingezogen oder aufgeweitet ist, wobei sich die Enden zweier benachbarter Halbschalen (16, 17) in Umfangsrichtung etwas überlappen.

11. Heizgerät nach einem der Ansprüche 1 bis 9,
**dadurch gekennzeichnet, dass** die Enden einer Halbschale (16, 17) stumpf miteinander verschweißt werden, wobei das erste Ende der ersten Halbschale (16, 17) mit dem zweiten Ende einer anderen, benachbarten Halbschale (16, 17) verbunden wird.

12. Heizgerät nach einem der Ansprüche 1 bis 11,
**dadurch gekennzeichnet, dass** jeweils zwei einander zugeordnete Halbschalen (16, 17) und/oder das gesamte Profil (9) innen und außen an jeweils schraubenförmig umlaufenden Berührungsflächen mit Schweißnähten verbunden sind.

13. Heizgerät nach einem der Ansprüche 1 bis 12,
**dadurch gekennzeichnet, dass** die Geometrie des Spaltes (2) für den Durchtritt von Heizgasen zwischen dem Profil (9) des Wärmetauschers und/oder der den Spalt (2) begrenzenden, Wärme übertragenden Oberflächen durch den Umformvorgang bei der Herstellung der Halbschalen (16, 17) beeinflussbar ist.

14. Heizgerät nach einem der Ansprüche 1 bis 13,
**dadurch gekennzeichnet, dass** eine oder zwei benachbarte, sich gegenüberstehende, den Spalt (2) begrenzende Oberflächen mit Vorsprüngen versehen sind, welche die Spaltbreite definieren und sich aufeinander und/oder auf der gegenüber liegenden Oberfläche abstützen.

15. Heizgerät nach einem der Ansprüche 1 bis 14,
**dadurch gekennzeichnet, dass** zwei benachbarte, sich gegenüberstehende, den Spalt (2) begrenzende Oberflächen durch Punktschweißung miteinander verbunden sind, wobei der freie Spaltquerschnitt überwiegend gewährleistet ist und nur eine punktweise Berührung vorliegt.
